# FASCICULE DE BREVET EUROPEEN

(11) **EP 0 352 840 B1**
(45) Date de publication et mention de la délivrance du brevet: **12.01.1994**
(21) Numéro de dépôt: 89201835.9
(22) Date de dépôt: 11.07.1989
(51) Int. Cl.: B32B 27/08, B32B 27/18, B32B 27/30, C08K 5/00, C08L 33/12

(54) **Structures thermoplastiques rigides coextrudées permettant d'obtenir des matériaux bi-orientés**
Thermoplastische coextrudierte Hartstrukturen zur Erlangung von biaxial orientierten Materialien
Rigid thermoplastic co-extruded structures permitting the obtention of biaxially oriented materials

(30) Priorité: 21.07.1988 FR 8809995
(43) Date de publication de la demande: 31.01.1990
(73) Titulaire: SOLVAY (Société Anonyme), B-1050 Bruxelles (BE)
(72) Inventeur: Dehennau, Claude, B-1410 Waterloo (BE); Dubois, Paul, B-7822 ATH (BE)
(74) Mandataire: Bouchoms, Maurice

(56) Documents cités:
- FR-A- 2 340 973
- US-A- 4 230 768

## Description

La présente invention concerne des structures thermoplastiques rigides biorientées comprenant une couche en polymère de chlorure de vinyle et une couche de recouvrement en polyméthylméthacrylate contenant des produits absorbant le rayonnement ultraviolet.

Il est connu de fabriquer à partir de résines thermoplastiques, telles que le polymère de chlorure de vinyle (PVC, etc.), des objets finis présentant des caractéristiques mécaniques améliorées en orientant les macromolécules dans une direction ou dans deux directions orthogonales. On observe, en proportion de l'orientation réalisée, une augmentation importante de la rigidité et de la résistance aux chocs.

Il est également connu, notamment par le brevet français FR-A-1571391, d'améliorer la résistance à la lumière et aux intempéries des objets finis en PVC par coextrusion d'une couche de recouvrement d'un homo- ou d'un copolymère de méthacrylate de méthyle. De cette façon, on modifie la surface des objets finis et on leur confère les bonnes caractéristiques du polyméthylméthacrylate en ce qui concerne sa haute brillance, sa grande résistance aux intempéries et ses excellentes caractéristiques optiques.

Il est également connu, notamment par la demande de brevet allemand DE-A-2536461, de produire des complexes multicouches résistant aux chocs comprenant au moins deux matières thermoplastiques de résistance aux chocs différente en étirant biaxialement le complexe à une température supérieure au point de ramollissement des matériaux concernés mais à laquelle au moins le matériau ayant la résistance aux chocs la plus faible est à l'état thermoélastique. Le matériau le plus résistant aux chocs est, en particulier, le PVC, l'autre résistant bien aux intempéries est, en particulier, le polyméthylméthacrylate. La température d'orientation du complexe multicouche se situe dans l'intervalle 120-150°C.

L'inconvénient de ces températures d'orientation élevées est que la capacité d'allongement du PVC est faible et que la vitesse de relaxation des chaînes est élevée, si bien qu'on ne peut obtenir des élongations suffisantes pour provoquer une orientation permettant d'améliorer sensiblement les caractéristiques mécaniques finales. Dans ces conditions, on ne peut en effet obtenir pour le PVC qu'une élongation de l'ordre de 30 % en étirage biaxial qui ne suffit pas à provoquer une orientation finale suffisante. L'optimum de la température d'orientation du PVC se situe de fait dans l'intervalle de 95-105°C, proche de la température de transition vitreuse du PVC (85°C) température à laquelle l'élongation du PVC est supérieure à 70 % en étirage biaxial.

La présente invention a pour but de fournir des structures thermoplastiques rigides biorientées comprenant une couche en polymère de chlorure de vinyle et une couche de recouvrement en polyméthylméthacrylate contenant des produits absorbant le rayonnement ultraviolet permettant une biorientation moléculaire dans l'intervalle 95-110°C.

La présente invention concerne à cet effet des structures thermoplastiques rigides biorientées à couches polymériques multiples coextrudées comprenant une couche en polymère de chlorure de vinyle et une couche de recouvrement en polyméthylméthacrylate contenant des produits absorbant le rayonnement ultraviolet, qui se caractérisent en ce que la couche de recouvrement en polyméthylméthacrylate contient des produits absorbant le rayonnement ultraviolet en quantité suffisante pour amener la température de transition vitreuse de cette couche à une valeur au plus égale à 105°C. En général, ce but est atteint en incorporant de 3 à 7 % en poids de produits absorbant le rayonnement ultraviolet dans la couche de recouvrement et ce par rapport au poids de cette couche.

La température de transition vitreuse est évaluée par des mesures des propriétés mécaniques dynamiques des polymères de l'état vitreux à l'état fondu suivant la norme ASTM-D4065 (ou les équivalents, norme ISO 537 et norme DIN 53445). La mesure consiste à déterminer sous fréquence F de 0,1 cycle par seconde ou une pulsation de 0,6 sec-1.
le module élastique dynamique G′ et le module de perte G˝ en fonction de la température. Le facteur de perte tg^{δ} se calcule par le rapport G˝/G′. La température de transition vitreuse est la température pour laquelle le facteur de perte est maximum.

Par polymères de chlorure de vinyle, on entend les homo- et copolymères de chlorure de vinyle, ces derniers contenant au moins 50 % en poids d'unités dérivées du chlorure de vinyle et au moins un monomère copolymérisable avec le chlorure de vinyle. Les monomères copolymérisables sont ceux généralement employés dans les techniques classiques de copolymérisation du chlorure de vinyle. On peut citer, à titre d'exemples les esters vinyliques des acides mono- et polycarboxyliques, tels que l'acétate, le propionate, le benzoate de vinyle; les acides insaturés mono- et polycarboxyliques, tels que les acides acrylique, méthacrylique, maléique, fumarique, itaconique, ainsi que leurs esters aliphatiques, cycloaliphatiques, aromatiques, leurs amides, leurs nitriles; les halogénures d'alkyle, de vinyle, de vinylidène; les alkylvinyléthers. De préférence, les polymères de chlorure de vinyle utilisés dans le cadre de la présente invention sont les homopolymères de chlorure de vinyle.

Par polyméthylméthacrylate, on entend les homo- et copolymères de méthacrylate de méthyle, ces derniers contenant au moins 80 % en poids de méthacrylate de méthyle et au moins un monomère copolymérisable avec le méthacrylate de méthyle. Les monomères copolymérisables sont ceux généralement employés dans les techniques classiques de copolymérisation du méthacrylate de méthyle. On peut citer, à titre d'exemples l'acrylate de méthyle, l'acrylate d'éthyle, l'acrylate de propyle et l'acrylate de butyle. De préférence, le polyméthylméthacrylate utilisé dans le cadre de la présente invention est l'homopolymère de méthacrylate de méthyle.

Les produits absorbant le rayonnement ultraviolet utilisables selon la présente invention sont, par exemple des composés benzophénoniques, tels que les suivants: 2,4-dihydroxy-benzophénone, 2-hydroxy-4-méthoxy-benzophénone, 2,2′-dihydroxy-4-méthoxy-benzophénone, 2,2′-dihydroxy-4,4′-diméthoxy-benzophénone, 2-hydroxy-4-n-octoxy-benzophénone et 2-hydroxy-4-isooctoxy-benzophénone, des composés benzotriazoliques, tels que les suivants : 2-(2′-hydroxy-5′-méthylphényl)benzotriazole, 2-(3′,5′-di-t-butyl-2′-hydroxyphényl)- 5-chlorobenzotriazole, 2-(3′-t-butyl-2′-hydroxy-5′-méthylphényl)-5- chlorobenzotriazole, 2-(2′-hydroxy-3′,5′-di-t-butylphényl)benzotriazole, 2(2′-hydroxy-3′,5′-di-t-amylphényl)benzotriazole et 2(2′-hydroxy-5′-t-octylphényl)benzotriazole et des composés oxanilides substitués, tels que le N,N′(2-éthyl-2′éthoxyphényl)oxanilide. Les produits absorbant le rayonnement ultraviolet préférés dans le cadre de l'invention sont des composés benzophénoniques et plus particulièrement, le 2-hydroxy-4-méthoxy-benzophénone.

Outre les produits absorbant le rayonnement ultraviolet dans la couche de recouvrement, les matières thermoplastiques utilisables selon la présente invention peuvent contenir d'autres additifs conventionnels, tels que des stabilisants, des lubrifiants, des agents antistatiques, des charges, des pigments, des colorants, des ignifugeants, des lubrifiants internes, etc.

Les structures thermoplastiques rigides biorientées selon l'invention peuvent être réalisées par coextrusion suivie d'un traitement d'orientation selon un ou deux axes. Pour la réalisation desdites structures avant orientation, on peut faire appel aux techniques usuelles de coextrusion à travers une filière plane ou ronde, à bloc d'alimentation ("feedblock") ou à multicanaux ("multimanifold"). Néanmoins, on donne la préférence aux structures multicouches coextrudées à travers une filière à bloc d'alimentation et plus particulièrement encore au travers d'une filière plate à bloc d'alimentation. Pour réaliser l'orientation desdites structures après coextrusion, on peut faire appel aux techniques usuelles d'étirage mono- ou biaxial connues, la préférence étant accordée aux techniques d'étirage biaxial comme l'étirage biaxial par extension ou gonflement en matrice annulaire, l'étirage biaxial simultané en matrice en T, l'étirage biaxial séquentiel en deux étapes. Dans ce cas, on préfère que le taux d'étirage soit supérieur à 50 %. Les conditions d'étirage sont choisies de façon à orienter au maximum les macromolécules et à conserver un niveau suffisant d'orientation dans le matériau fini. Dans ce but, il faut exercer sur la matière une traction à vitesse élevée, suivie d'un refroidissement rapide de la matière étirée, dès la fin de l'étirage.
Normalement, les vitesse d'étirage sont comprises entre 200 et 1000 %/min.

L'épaisseur des couches polymériques constitutives des complexes multicouches selon l'invention et l'épaisseur totale desdites structures n'est pas critique et dépend bien entendu de l'usage auquel on les destine. En général, on préfère toutefois que l'épaisseur totale desdites structures après étirage, soit comprise entre 0,3 et 3 mm et de préférence entre 0,5 et 1,5 mm. Comme la couche de recouvrement est réalisée en un matériau sensiblement plus coûteux que le PVC, on s'efforce de ne pas la rendre trop épaisse, de sorte que l'on prévoit avantageusement des épaisseurs de couche de recouvrement se situant entre 1 et 10 % d'épaisseur de la couche en PVC. La couche de recouvrement peut être déposée sur toute la périphérie des structures rigides multicouches ou sur une partie de la périphérie desdites structures et de préférence, sur la partie de la périphérie destinée à être exposée à l'action des agents atmosphériques.

Les mélanges du polyméthylméthacrylate et des produits absorbant le rayonnement ultraviolet peuvent être préparés selon toutes les techniques de mélange connues, les ingrédients, se trouvant à l'état solide ou à l'état fondu. Pour assurer l'homogénéité des mélanges et la bonne dispersion des constituants dans le polyméthylméthacrylate, on pratique généralement un malaxage dans la zone de température correspondant à l'état viscoélastique du polymère.

Le malaxage peut être réalisé par tout moyen connu à cet effet. Ainsi, on peut travailler indifféremment en malaxeurs du type externe ou du type interne. Les malaxeurs du type interne sont préférés, et plus particulièrement les extrudeuses qui constituent une classe particulière de malaxeurs internes. Le malaxage peut être effectué dans les conditions habituelles bien connues de l'homme de métier.

La température de malaxage n'est pas critique et est conditionnée par la nature et les températures de décomposition des ingrédients. Généralement, on travaille à des températures ne dépassant pas 250°C.

La durée du malaxage est choisie en tenant compte de la nature du polyméthylméthacrylate et de la température appliquée. Cette durée est généralement comprise entre 5 secondes et 20 minutes et le plus souvent entre 10 secondes et 15 minutes. On préfère travailler pendant des durées situées entre 15 secondes et 10 minutes.

Les exemples qui suivent sont destinés à illustrer l'invention sans toutefois la limiter.

### Exemples 1 à 6 et 1R

Ces exemples montrent les changements de températures de transition vitreuse qui se produisent après malaxage du polyméthylméthacrylate (PMMA) et des produits absorbant le rayonnement ultraviolet suivant l'invention (exemples 1 et 4 à 6). Dans les exemples 1 et exemples de référence 2R et 3R, on utilise 4 grammes d'agent absorbant le rayonnement ultraviolet pour 100 grammes de PMMA. Dans les exemples 4 à 6, on utilise 7 grammes d'agent absorbant le rayonnement ultraviolet pour 100 grammes de PMMA. Dans l'exemple 1R, donné à titre de référence, on n'incorpore pas d'agent absorbant le rayonnement ultraviolet.

Les mélanges des exemples 1 et 4 à 6, et exemples de référence 2R et 3R ont été préparées à l'aide d'un micromalaxeur SCHWABENTHAN. Les températures des cylindres ont été réglées à 200°C, le taux de friction à 1,2 et la vitesse de rotation à 22 tours/minute, l'entrefer entre les deux cylindres étant réglé de telle façon que l'épaisseur du crêpe formé est comprise entre 1 et 1,5 mm. La quantité de matière utilisée a été de 200 grammes et la matière était malaxée pendant 10 minutes. Après refroidissement, le crêpe formé a été pressé à 200°C, pour obtenir une plaque de 1,2 mm d'épaisseur. Les plaques formées par pressage à chaud ont été utilisées pour mesurer les températures de transition vitreuse. Les valeurs mesurées des températures de transition vitreuse en fonction de la composition sont données dans le tableau ci-après. Les exemples 1 et 4 à 6, et exemples de référence 2R et 3R se différencient par la nature et la quantité d'agent absorbant le rayonnement ultraviolet dans la composition.

| Exemple | Composition | Température de transition vitreuse |
|---|---|---|
| 1 | 100 gr PMMA + 4 gr anti-UVA(1) | 104°C |
| 2R | 100 gr PMMA + 4 gr Tinuvin 312(2) | 106°C |
| 3R | 100 gr PMMA + 4 gr Tinuvin 320(3) | 109°C |
| 4 | 100 gr PMMA + 7 gr anti-UVA | 97°C |
| 5 | 100 gr PMMA + 7 gr Tinuvin 312 | 99°C |
| 6 | 100 gr PMMA + 7 gr Tinuvin 320 | 104°C |
| 1R | PMMA(4) | 114°C |

| | | |
|---|---|---|
| (1)- anti-UVA (marque de fabrique - Soc. Fr. Organo Synthèse) est le 2-hydroxy-4-méthoxy-benzophénone | | |
| (2)- Tinuvin 312 (marque de fabrique - Ciba-Geigy) est le N′N′-(2 éthyl-2′éthoxyphényl)oxanilide | | |
| (3)- Tinuvin 320 (marque de fabrique - Ciba-Geigy) est le 2-(2′hydroxy-3′5′-di-tert-butylphényl)benzotriazole | | |
| (4)- PMMA est le polyméthylméthacrylate de la marque TD542 (marque de fabrique - Imperial Chemical Industries Ltd) | | |

L'allongement à 105°C des produits obtenus dans les exemples 1 et 1R à 3R, suivant la norme ISO 527, a donné les valeurs suivantes :

| Exemple | Allongement à la rupture |
|---|---|
| 1 | 448 % |
| 2R | 314 % |
| 3R | 278 % |
| 1R | 242 % |

On constate un allongement à la rupture très élevé de la composition suivant l'exemple 1, ce qui est très favorable pour le procédé de biorientation.

### Exemples 7 et 4R

Ces exemples montrent les différences du comportement de la biorientation qui se produisent à partir des structures rigides multicouches suivant l'invention. Dans l'exemple 4R, donné à titre de référence, on n'incorpore pas d'agent absorbant le rayonnement ultraviolet dans la couche de recouvrement.

Pour fabriquer les structures coextrudées selon les exemples 7 et 4R, on utilise deux extrudeuses A et B alimentant un bloc d'alimentation lequel alimente lui-même une filière plate de 30 cm de largeur, la température du PVC sortant de l'extrudeuse étant égale à 205°C et celle de la couche de recouvrement étant égale à 220°C. Le PVC est un homopolymère de chlorure de vinyle ayant un nombre K égal à 64 et stabilisé à l'étain.

Le bloc de raccordement est conditionné thermiquement à 180°C. La filière plate est conditionnée thermiquement à 195°C. L'ouverture de sortie de la filière plate est fixée de telle façon que l'épaisseur totale de la structure coextrudée plane est égale à 3,6 mm et que l'épaisseur de la couche de recouvrement est égale à 120 µm.

Après refroidissement, à température ambiante, on a découpé avec précaution, à l'aide d'un couteau bien aiguisé, une plaque d'une surface de 300 x 300 mm. On a ensuite placé la plaque découpée en position dans une étireuse Brückner-Karo, la plaque étant maintenue en position en pinçant ses bords entre les pinces de l'étireuse.

La plaque est ensuite chauffée par de l'air chaud conditionné à la température d'étirage voulue. Après conditionnement thermique, la plaque est ensuite étirée biaxialement en déplaçant les pinces d'étireuse jusqu'à deux fois leurs distances initiales dans les deux sens perpendiculaires. La vitesse d'étirage est égale à 550 %/min. La plaque étirée biaxialement, avec un taux d'élongation de 80 % dans les deux sens en sa partie centrale, est ensuite refroidie et enlevée des pinces.

Le comportement à la biorientation à 105°C des structures rigides multicouches suivant l'invention et suivant l'exemple de comparaison 4R est donné dans le tableau suivant.

Un bon comportement à l'étirage signifie que la plaque s'étire biaxialement jusqu' aux conditions imposées.

Par contre, un mauvais comportement à l'étirage signifie que la plaque se déchire pendant le test imposé de biorientation.

| Exemple | Composition de la couche de recouvrement | Température de transition vitreuse | Comportement à l'étirage |
|---|---|---|---|
| 7 | 100 gr PMMA + 4gr anti-UVA | 104°C | Bon |
| 4R | PMMA | 114°C | Mauvais |

Ces résultats montrent clairement que la valeur de la température de transition vitreuse égale ou inférieure à 105°C (exemple 7) de la couche de recouvrement est nécessaire pour obtenir un bon comportement à l'étirage.

La résilience en traction mesurée suivant la norme DIN 53448 du produit obtenu selon l'exemple 7 s'élève de 330 kJ/m² avant biorientation jusqu'à 1150 kJ/m² après biorientation. Cette dernière valeur est très proche de la résilience en traction des plaques biorientées en PVC, qui est de l'ordre de 1250 kJ/m². La valeur optimale de la résilience en traction obtenue pour le produit selon l'exemple 4R est égale à 270 kJ/m². Cette valeur optimale est obtenue par biorientation à 125°C.

Ces résultats montrent clairement l'avantage des structures thermoplastiques rigides biorientées suivant l'invention.

## Revendications

1. Structures thermoplastiques rigides biorientées à couches polymériques multiples coextrudées comprenant une couche en polymère de chlorure de vinyle et une couche de recouvrement en polyméthylméthacrylate contenant des produits absorbant le rayonnement ultraviolet caractérisées en ce que la couche de recouvrement en polyméthylméthacrylate contient des produits absorbant le rayonnement ultraviolet en quantité suffisante pour amener la température de transition vitreuse de cette couche à une valeur au plus égale à 105°C.

2. Structures thermoplastiques rigides biorientées à couches polymériques multiples coextrudées suivant la revendication 1, caractérisées en ce que les produits absorbant le rayonnement ultraviolet sont choisis parmi les composés benzophénoniques ou benzotriazoliques.

3. Structures thermoplastiques rigides biorientées à couches polymériques multiples coextrudées suivant les revendications 1 et 2, caractérisées en ce que le produit absorbant le rayonnement ultraviolet est le 2-hydroxy-4-méthoxy-benzophénone.

4. Structures thermoplastiques rigides biorientées à couches polymériques multiples coextrudées suivant les revendications 1 à 3, caractérisées en ce qu'on incorpore de 3 à 7 % en poids de produits absorbant le rayonnement ultraviolet dans la couche de recouvrement par rapport au poids de cette couche.

5. Structures thermoplastiques rigides biorientées à couches polymériques multiples coextrudées suivant les revendication 1 à 4, caractérisées en ce que l'épaisseur de la couche de recouvrement est comprise entre 1 et 10 % de l'épaisseur de la couche en polymère de chlorure de vinyle.

6. Structures thermoplastiques rigides biorientées à couches polymériques multiples coextrudées suivant les revendications 1 à 5, caractérisées en ce que le taux d'étirage biaxial est supérieur à 50 %.

7. Structures thermoplastiques rigides biorientées à couches polymériques multiples coextrudées suivant l'une quelconque des revendications 1 à 6, caractérisées en ce qu'elles résultent d'une coextrusion à travers une filière à bloc d'alimentation et d'une post-orientation.

8. Structures thermoplastiques rigides biorientées à couches polymériques multiples coextrudées suivant l'une quelconque des revendications 1 à 7, caractérisées en ce qu'elles résultent d'une coextrusion à travers une filière plate à bloc d'alimentation et d'une post-orientation.

## Claims

1. Biaxially oriented rigid thermoplastic structures with multiple coextruded polymeric layers comprising a layer of vinyl chloride polymer and a coating layer of polymethyl methacrylate containing products absorbing ultraviolet radiation, characterized in that the coating layer of polymethyl methacrylate contains products absorbing ultraviolet radiation in sufficient quantity to bring the glass transition temperature of this layer to a value not exceeding 105°C.

2. Biaxially oriented rigid thermoplastic structures with multiple coextruded polymeric layers according to Claim 1, characterized in that the products absorbing ultraviolet radiation are chosen from benzophenone or benzotriazole compounds.

3. Biaxially oriented rigid thermoplastic structures with multiple coextruded polymeric layers according to Claims 1 and 2, characterized in that the products absorbing ultraviolet radiation are 2-hydroxy-4-methoxy-benzophenone.

4. Biaxially oriented rigid thermoplastic structures with multiple coextruded polymeric layers according to Claims 1 to 3, characterized in that 3 to 7 % by weight of products absorbing ultraviolet radiation is incorporated into the coating layer, relative to the weight of this layer.

5. Biaxially oriented rigid thermoplastic structures with multiple coextruded polymeric layers according to Claims 1 to 4, characterized in that the thickness of the coating layer is between 1 and 10 % of the thickness of the vinyl chloride polymer layer.

6. Biaxially oriented rigid thermoplastic structures with multiple coextruded polymeric layers according to Claims 1 to 5, characterized in that the biaxial draw ratio is higher than 50 %.

7. Biaxially oriented rigid thermoplastic structures with multiple coextruded polymeric layers according to any one of Claims 1 to 6, characterized in that they result from a coextrusion through a feedblock die and a post-orientation.

8. Biaxially oriented rigid thermoplastic structures with multiple coextruded polymeric layers according to any one of Claims 1 to 7, characterized in that they result from a coextrusion through a flat die with a feedblock and a postorientation.

## Patentansprüche

1. Thermoplastische, biaxial orientierte Hartstrukturen mit mehreren coextrudierten polymeren Schichten, umfassend eine Schicht aus Vinylchloridpolymer und eine Überzugsschicht aus Polymethylmethacrylat, enthaltend Produkte, die die ultraviolette Strahlung absorbieren, dadurch gekennzeichnet, daß die Überzugsschicht aus Polymethylmethacrylat Produkte enthält, die die ultraviolette Strahlung in einer Menge absorbieren, die ausreicht, um die Temperatur des Glasübergangs dieser Schicht auf einen Wert von höchstens gleich 105°C zu bringen.

2. Thermoplastische, biaxial orientierte Hartstrukturen mit mehreren coextrudierten polymeren Schichten gemäß Anspruch 1, dadurch gekennzeichnet, daß die die ultraviolette Strahlung absorbierenden Produkte ausgewählt sind unter den Benzophenon- oder Benzotriazolverbindungen.

3. Thermoplastische, biaxial orientierte Hartstrukturen mit mehreren coextrudierten polymeren Schichten gemäß den Ansprüchen 1 und 2, dadurch gekennzeichnet, daß das die ultraviolette Strahlung absorbierende Produkt das 2-Hydroxy-4-methoxy-benzophenon ist.

4. Thermoplastische, biaxial orientierte Hartstrukturen mit mehreren coextrudierten polymeren Schichten gemaß den Ansprüchen 1 bis 3, dadurch gekennzeichnet, daß man 3 bis 7 Gew.-% der die ultraviolette Strahlung absorbierenden Produkte, bezogen auf das Gewicht dieser Schicht, in die Überzugsschicht einarbeitet.

5. Thermoplastische, biaxial orientierte Hartstrukturen mit mehreren coextrudierten polymeren Schichten gemäß den Ansprüchen 1 bis 4, dadurch gekennzeichnet, daß die Dicke der Überzugsschicht zwischen 1 und 10 % der Dicke der Schicht aus Vinylchloridpolymer beträgt.

6. Thermoplastische, biaxial orientierte Hartstrukturen mit mehreren coextrudierten polymeren Schichten gemäß den Ansprüchen 1 bis 5, dadurch gekennzeichnet, daß der biaxiale Streckgrad größer als 50 % ist.

7. Thermoplastische, biaxial orientierte Hartstrukturen mit mehreren coextrudierten polymeren Schichten gemäß einem der Ansprüche 1 bis 6, dadurch gekennzeichnet, daß sie aus einer Coextrusion durch eine Düse, um einen Block zu liefern, und einer Nachoriertierung stammen.

8. Thermoplastische, biaxial orientierte Hartstrukturen mit mehreren coextrudierten polymeren Schichten gemäß einem der Ansprüche 1 bis 7, dadurch gekennzeichnet, daß sie aus einer Coextrusion durch eine Breitschlitzdüse zur Lieferung eines Blocks und einer Nachorientierung stammen.
